# EUROPEAN PATENT APPLICATION

(11) **EP 4 651 535 A1**
(43) Date of publication of application: **19.11.2025**
(21) Application number: 24175363.1
(22) Date of filing: 13.05.2024
(51) Int. Cl.: H04W 12/30, H04W 12/041, H04L 9/08, H04L 9/00, H04L 9/40, H04W 4/50

(54) **PRE-PAID CARD ISSUANCE AT POINT OF SALE OR ON ARRIVAL**

(71) Applicant: Giesecke+Devrient Mobile Security Germany GmbH, 81677 München (DE)
(72) Inventor: Mishra, Santosh Kumar, 411004 Pune (IN); Pandey, Ankit, 411004 Pune (IN)
(74) Representative: Ter Meer Steinmeister & Partner

(57) **Abstract**

Provided is a secure element to securely communicate over a (mobile) communication network. The secure element comprises a secure storage unit in which an operating system and predetermined replacement data are stored and a secure control unit. The secure control unit is configured to boot up the operating system using the predetermined replacement data; provide a list of individualization requirements to an external individualization unit; generate secure individualization data based on the list of individualization requirements; store the generated secure individualization data in the secure storage unit; and establish a secure communication over the (mobile) communication network using the secure individualization data.

## Description

The present invention relates to a secure element, a system comprising the secure element and an individualization unit external to the secure element to securely individualize the secure element. The invention further relates to a method for securely individualizing a secure element in said system.

Massive amounts of devices connect daily to existing (mobile) communication networks. The number of devices, in particular terminal devices or end (user) devices, is increasing at an accelerating pace due to the fourth industrial revolution which is driven by the Internet of Things, IoT.

For a secured communication over a communication network, the communication may include a secure element, in particular a universal integrated circuit card, UICC or its electronic version eUICC, which need to be configured so as to be worldwide unique. This configuration is achieved by a personalization process of the UICC which is a combination of several steps including data generation, individualization, secure loading of individualized data into the UICC, secure transfer and storage of the individualized data into a database of a communication entity, e.g., a mobile network operator.

Based on a profile and other inputs received from the core network entity, the manufacturer of the UICC generates unique data such as the IMSI or the ICCID, keys for establishing a secure channel, over-the-air updates, authentication and applications, and PINs and/or PUKs. The profile enables the UICC to authenticate the terminal device to the communication network and vice versa.

Once the unique data is generated, the manufacturer securely loads the unique data to the UICC along with the profile of the communication entity. The keys and PINs/PUKs related data is then securely transferred to a server of the communication entity to be securely loaded into its server database, e.g., hosting the home location register, HLR. Usually, the transfer of the unique data to the server of the communication entity is executed by an individual data generation team via a pre-defined secure mechanism, wherein the communication entity ensures that the server components are configured with the correct and expected unique data such that the secure element may establish a secured connection over the communication network.

The conventional personalization process is a centralized process which requires security in every step, in particular during data generation, data transfer and data storage. It is further required to securely transfer all data to the communication entity, which therefore needs to maintain a logical entity for respective data encryption/decryption and key management.

Usually, the personalization process is carried out in a personalization center in pre-issuance phase of the UICC which dramatically increases the production time due to generating and personalizing unique card specific data to each UICC. In addition, the actual use of UICC has often not yet been determined at the time of its production, in which cases an initially personalized UICC may need to be reconfigured, e.g., by setting a different profile, after production before its use.

There are approaches to adapt the conventional personalization of a UICC. For instance, instead of generating and assigning eSIMs when mobile devices are being activated, which can require significant processing overhead, EP 4 037 357 B1 suggests to pre-personalize eSIMs with a basic set of information and assign the pre-personalized eSIMs to the mobile devices when they are activated. However, the pre-personalization of the eSIMs is carried out when a mobile device is being manufactured, such that the personalization process itself remains centralized.

EP 3 258 668 B1 relates to an eUICC that is configured to initially execute a boostrap operating system, then to verify the eSIM using an authentication procedure, and to execute a common operating system which loads the eSIM. This method enables the eUICC and any trusted third-party entity to mutually verify one another. The trusted dialog is based on a unique device key and endorsement certificate. However, the unique device key is provided during manufacturing of the eUICC within a user equipment or terminal device.

US 8,571,537 B2 relates to a method providing a UICC with a provisional profile and replacing the provisional profile by a final profile upon UICC issuance.

US 8,165,635 B2 relates to over the air provisioning of soft cards on devices with wireless communications capabilities.

Hence, there is a need for at least partially reducing existing barriers for a decentralized personalization of a secure element.

This objective is solved with the features of the independent claims. Further advantageous embodiments are described in the dependent claims.

In an aspect of the present invention there is provided a secure element being adapted to securely communicate over a communication network.

The secure element comprises a secure storage unit in which an operating system and predetermined replacement data are stored. The operating system enables the secure element to boot-up alone and establish a connection with a communication entity using the predetermined replacement data. The operating system thus may be a fully enabled operating system, not just a bootstrap operating system.

The predetermined replacement data may comprise a dummy authentication subscriber key and/or further dummy parameters for keys and/or PINs/PUKs that are usually required to establish a secure connection over the communication network. The replacement data is predetermined as it may be generated during the production of the secure element, in particular in the same way for many secure elements. The replacement data may be identical for different secure elements. In other words, the predetermined replacement data is not individualized or personalized but provides a minimum data including dummy values for the secure element that needs to be properly personalized at issuance of the secure element for establishing a secure communication channel over the communication network. The minimum data, however, is required to bootup the secure element, wherein all further individual data such as unique data, PINs/PUKs and/or keys may be personalized subsequently. The replacement data may have the same size, format and structure as the to be generated secure individualization data.

Moreover, the secure control element comprises a secure control unit which is configured to bootup the operating system using the predetermined replacement data. In other words, upon inserting the secure element into a terminal device, the secure element may bootup the secure element. Using the predetermined replacement data, the secure element is not able to securely communicate over the communication network. However, the operating system enables a complete bootup of the secure element, as opposed to a bootstrap operating system.

The secure control element is further configured to provide a list of individualization requirements to an external individualization unit. The list of individualization requirements may be a static list that is preconfigured and maintained in the secure element, e.g., within a dedicated security domain and related application. Alternatively, or in combination, the list of individualization requirements may be a dynamic list that is generated at runtime by the operating system of the secure element. The list of individualization requirements may be fetched by the external individualization unit and returned by the secure element. The list of individualization requirements may be transferred from the secure element to the external individualization unit by way of a secure session, e.g., a certificate-based session.

In one embodiment, the secure control unit may be configured to calculate a key based checksum of the list of individualization requirements, e.g, using HMAC, transmit the checksum with the list of individualization requirements. The receiving entity, e.g., the communication entity should verify the checksum. The key based checksum may be generated using a unique key which is pre-personalized, e.g., as part of the minimum data required for bootup (replacement data), both at the secure element and the communication entity. Additionally, or alternatively, the complete list of individualization requirements may be encrypted with the unique key.

The external individualization unit may be a stand-alone unit of the manufacturer of the secure element or a communication entity, such as a mobile network operator, in particular a card issuance machine.

The list of individualization requirements may include a list of unique data, keys and/or PINs/PUKs which need to be personalized for the secure element. Each list element of the list of individualization requirements may refer to secure data that is to be personalized. The list of individualization requirements may depend on the profile installed in the secure element.

The secure control unit is further configured to generate secure individualization data based on the list of individualization requirements. The secure individualization data may include the unique data, keys and/or PINs/PUKs, which may be generated following a predetermined data derivation mechanism. The secure individualization data may be any generic data that is specific to the dedicated security domain and/or related application, which may vary from one secure element to another. The external individualization unit may be involved in generating secure individualization data and/or may derive the secure individualization data on its own based on the list of individualization requirements and/or may receive generated secure individualization data.

Moreover, the secure control unit is configured to store the generated secure individualization data in the secure storage unit. The secure individualization data may be stored in replacement of the replacement data. At least a portion of the secure individualization data may be stored in a subscription profile of the secure element. Consequently, the secure element may use the secure individualization data (or secure individualized data) repeatedly, e.g., for authentication procedures.

The secure control unit is configured to establish a secure communication over the communication network using the secure individualization data, in particular the stored secure individualization data. For attaching, e.g., to a mobile communication network, a challenge-response authentication procedure may be performed. Therein, the secure element sends (via a terminal device) to an entity of the mobile communication network, over the mobile communication network, a network attach request. The mobile communication entity, e.g., a mobile network operator, sends to the terminal device over the mobile communication network an authentication challenge. The secure element generates an authentication response based on the received challenge and a secret cryptographic key as secure individualized data of the secure element. Only after successful execution of the challenge-response authentication, the exchange of data between the terminal device and the backend system may begin.

The secure element as described above has the advantage the data generation and individualization processes are not required at production side of the secure element. Instead, these processes are shifted and distributed at card issuance stage. Thus, production time may be saved.

The term "secure element" is synonymous with the term "UICC", "eUICC", "iUICC", "Subscriber Identity Module", "Smart Card", "iUICC", "Integrated eUICC", "Integrated Secure Element", "embedded Secure Element", "Secure Element", "SIM", "eSIM" or "iSIM". Secure element also includes USIM, TSIM, ISIM, CSIM or R-UIM.

A secure element, abbreviated SE, in the sense of the invention is an electronic module reduced in size and resource scope, which may have a control unit (microcontroller) and at least one interface (data interface) for communication with instances located outside the secure element, such as terminal devices, servers, etc.. This communication preferably takes place via a connection protocol, in the case of a secure element, in particular a protocol in accordance with the ETSI TS 102 221 or ISO-7816 standard.

The secure element can also be a software component in a trusted part of an operating system, a so-called Trusted Execution Environment, or TEE, of the device. For example, the secure element is formed within a secure runtime environment in the form of programs running therein, so-called "trustlets".

The secure element can also be an integral part of a larger integrated circuit, such as a modem or application processor. Such UICCs are referred to as "integrated UICC", "integrated TRE", "integrated eUICC" or "integrated SE". Such secure elements are permanently integrated into an SoC as an integrated processor block and can be connected via an in-chip bus.

The SE can also be an integral part of a larger integrated circuit, such as a modem or application processor. Such SEs are referred to as "integrated UICC," "integrated TRE," "integrated eUICC," or "integrated SE." Such SEs are permanently integrated into an SoC as an integrated processor block and can be connected via an in-chip bus. The SE has, for example, an internal or external secure non-volatile memory area in which the identity data is securely placed to prevent tampering and/or misuse attempts during identification and/or authentication to the network.

In one embodiment, the SE can be operable by means of a terminal device, whereby the SE in this embodiment is self-sufficient except for supply signals such as supply voltage, clock, reset, etc. Then the SE may have an interface (data interface, communication interface) for communication with the terminal device, into which the SE may be inserted ready for operation. This communication preferably takes place via a connection protocol, in particular a protocol in accordance with the ETSI TS 102 221 or ISO-7816 standard.

The communication network may be a mobile communication network or a mixed-type network. A mixed-type network may be a wired network with a personalization device comprising a secure element along with other wireless communication entities.

In a first embodiment, the external individualization unit is hosted in a secure environment and the secure control unit is further configured to generate a shared secret with the external individualization unit. The shared secret may be generated by the external individualization unit loading a dedicated security domain and related application into the secure element. Subsequently, the security domain may start a certificate-based session, such as according to the secure channel protocol '11' - Secure Channel Protocol '11' - Amendment F v1.4 | GPC_SPE_093 -, in which the shared secret is mutually generated. The shared secret, i.e., a secret that is shared between the external individualization unit and the secure element may be used for a key derivation. The secure individualization data may be independently generated by the key derivation in the external individualization unit and the secure element.

According to the first embodiment, the secure element may be equipped with the replacement data at a personalization center of the manufacturer of the secure element.

The secure control unit may be configured to generate the secure individualization data based on the list of individualization requirements using the shared secret. The external individualization unit may have fetched the list of individualization requirements from the secure element and/ or the secure element may have returned the list of individualization requirements. Accordingly, the list of individualization requirements and the shared secret may be present in both the secure element and in the external individualization unit such that both the secure element and the external individualization unit may independently generate the secure individualization data. Thus, no transfer of secure individualization data is required according to this embodiment. Consequently, no dedicated infrastructures are required at the (mobile) communication entity side to maintain key management.

The data derivation scheme, i.e., the generation of the secure individualization data, may trigger based on having the shared secret generated in the certificate-based session. For each list element of the list to individualization requirements, a derivation constant may be different.

In an alternative second embodiment, the secure control unit may be further configured to establish a secure channel to the external individualization unit and to provide the secure individualization data to the external individualization unit over the secure channel. In this case, the external individualization unit may be a card issuance machine of a (mobile) communication entity.

This embodiment may be particularly useful in cases, in which the external individualization unit is not hosted in a secure environment but in a public environment, such as at an airport or a train station. In contrast to the previous embodiment, the external individualization unit is not able to provide a secure domain, establish a certificate-based session for negotiating a shared key or execute a key derivation scheme. Instead, the derivation of the secure individualized data may be only executed within the secure element. The data derivation may be triggered by the external individualization unit, e.g., upon identifying the secure element.

According to the second embodiment, the secure element may be equipped with the replacement data at a personalization center of the manufacturer or a trusted third party. If the replacement data is provided by a personalization center that is not hosted by the manufacturer of the secure element, the individual requirements for keys and PINs/PUKs may be shared by the personalization center directly, as the trusted third party may not provide a security domain. The secure element may generate and maintain the list of requirements based on the shared requirements.

The external individualization unit and the secure element may establish a secure session in which the external individualization unit may fetch the derived secure individualized data along with the list of individualization requirements securely.

In one embodiment, the list of individualization requirements may comprise a number of list elements that are arranged in a predetermined order. The secure control unit may be further configured to generate the individualization data for each list element strictly according to the predetermined order. Similarly, the external individualization unit may derive the individualization data for each list element strictly according to the predetermined order of the list, according to the first embodiment.

The predetermined order or sequence which is strictly followed both by the secure element and the external individualization unit enables a data derivation without any further communication requirement. Each of the involved entities may achieve the identical knowledge on the derived secure individualization data independently. This knowledge may include a purpose of each secure individualization data and/or a respective storage location.

In one embodiment, the list of individualization requirements may comprise a number of list elements. Each list element may comprise a first attribute, in which a code representing a secure individualization parameter is stored and a second attribute, in which an address in the secure storage unit is stored. The secure control unit may be further configured to store the secure individualization data in the secure storage unit at the address indicated in a respective list element.

In other words, the list of individualization requirements may be a lookup table or mapping table which maps the individualization requirements to storage locations, i.e., specific addresses in the secure storage unit. Thus, the list of individualization requirements not only provides details about which keys and or PINs/PUKs need to be personalized but also which is their dedicated location in the secure storage unit. These locations may depend on the subscription profile installed in the secure element.

To improve the security of the secure element, the storage location/ address provided with the mapping table do not contain physical non-volatile memory addresses of the secure storage unit. Instead, the address may be either a virtual address, a relative address, or an encrypted address, wherein no one except the secure element may possess the keys to decrypt, translate or understand the address to derive the physical non-volatile memory address of the secure storage unit. These physical addresses should be protected since in case of their leak, the storage location of keys and/or sensitive data in the secure element may be revealed which creates a security issue.

In one embodiment, the predetermined replacement data may be stored in the secure storage unit at the addresses contained in the list of individualization requirements, wherein the secure control unit is configured to replace the predetermined replacement data by the generated individualization data according to the list of individualization requirements.

The initial replacement data provided by a personalization center based on a subscription profile may be considered as a placeholder for booting-up the secure element. The secure control unit may be further configured to replace the predetermined replacement data by the derived secure individualization data.

In one embodiment, the list of individualization requirements may be stored in the secure storage unit. Alternatively, or additionally, the secure control unit may be configured to initially generate the list of individualization requirements, preferably based on a subscription profile installed at the personalization center.

In one embodiment, the secure control unit may be further configured to transmit an individualization generation end indicator to the external individualization unit after having generated the secure individualization data. Upon receiving the individualization generation end indicator, the external individualization unit may trigger the application on the secure element to store the derived secure individualized data at the locations indicated in the list of individualization requirements.

In one embodiment, the secure control unit may be further configured to transmit a success message to the external individualization unit after having stored the secure individualization data. Upon having received the success message of the secure element, the external individualization unit may, based on the second embodiment, activate the secure element.

Provided is further a terminal device that is adapted to communicate securely over a mobile communication network. The terminal device comprises a secure element as described above, and a communication interface which is adapted to communicate via the mobile communication network.

The terminal device may be configured to transmit the list of individualization requirements to an external individualization unit, receive a trigger for data derivation, transmit an individualization generation end indicator to the external individualization unit, receive a trigger to store the derived secure individualization data and/or transmit the success message to the external individualization unit.

In other words, the terminal device is adapted to forward the communication from the secure element to the external individualization unit and/or the mobile communication entity and vice versa.

Provided is further a system for individualization of a secure element. The system comprises a secure element and an individualization unit external to the secure element. The secure element may be a secure element according to any embodiment described above. The secure control unit is configured to:
- boot up the operating system using the predetermined replacement data;
- provide a list of individualization requirements to the individualization unit;
- generate secure individualization data based on the list of individualization requirements;
- store the generated secure individualization data in the secure storage unit; and
- establish a secure communication over the communication network using the secure individualization data.

Once the secure element completed data individualization at its side and the secure individualization data (OTA keys, SCPxx keys, Other keys etc.) specific to the communication entity have been transferred via controlled secure ways and configured at server side, then the secure element may be usable over the respective communication network.

The individualization unit comprises a control unit which is configured to transmit the secure individualization data to a communication entity, preferably a mobile network operator.

In a first embodiment of the system, the secure control unit of the secure element may be further configured to generate a shared secret with the individualization unit and generate the secure individualization data based on the list of individualization requirements using the shared secret. According to the first embodiment of the system, the individualization unit may be hosted in a secure environment and its control unit may be further configured to generate the shared secret with the secure element and to generate the secure individualization data based on the list of individualization requirements using the shared secret.

This embodiment has the advantage that the secure individualization data may be derived in parallel and independently in the secure element and in the individualization unit such that no transfer of the derived data is required, and no key management is required at the communication network side.

This advantage results from the same data derivation scheme being executed in the individualization unit than in the secure element based on the mutually generated shared secret. The shared secret may be generated in a secure session according to the secure channel protocol '11', SCP11 as specified in GP Card Secure Channel Protocol '11' - Card Specification 2.3 - Amendment F, or the like.

In one embodiment, the secure individualization data is transferred to a server database of a closed loop eco system, such as the home location register HLR, an authentication center AuC, a unified data management UDM, a Subscriber identity de-concealing function SIDF, etc.

Additionally, or alternatively, the system may give provision to transfer a predefined portion of the secure individualization data, such as PIN, PUK etc. to its right audience, e.g., end users, call center or card printing systems.

In case the data derivation is triggered based on the shared secret as generated in a SCP11 session, the data derivation may further comprise a derivation constant, preferably unique derivation constant. Based on the derivation constant, the secure individualization data may be derived in the predefined sequence given by the mapping table.

Additionally, or alternatively, the data derivation scheme may comprise counters which start at a predefined number and are increased by a fixed number for each data derivation. The derivation constant and/or the counters provide more security to the data derivation scheme, wherein such security measure may be even implementation specific. Thus, even if the shared secret is revealed, the predictability of the secure individualization data based on the revealed shared key is strongly reduced, essentially to zero.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

In a second embodiment of the system, the secure control unit of the secure element is further configured to establish a secure channel to the individualization unit and provide the secure individualization data to the individualization unit over the secure channel. According to this embodiment, the individualization unit may be hosted in a public space. The control unit of the individualization unit may be further configured to receive the secure individualization data over the secure channel.

In one embodiment, the control unit of the individualization unit may be further configured to share the derived secure individualization data to the mobile communication entity, preferably its home location register, using a secure file transfer protocol FTP. Additionally, the control unit of the individualization unit may be configured to activate the secure element upon receiving a message indicating success of storing the secure individualized data in its secure storage element.

Provided is further a method for securely individualize a secure element in a system as described above. The method comprises, by the secure control unit of the secure element:
- booting up the operating system using the predetermined replacement data (RD);
- providing a list of individualization requirements to the secure individualization unit;
- generating a secure individualization data based on the list of individualization requirements;
- storing the generated secure individualization data in the secure storage unit (SU); and
- establishing a secure communication over the mobile communication network using the secure individualization data.

The method further comprises, by the control unit of individualization unit, transmitting the secure individualization data to a mobile communication entity, preferably the mobile network operator.

In a first embodiment of the method, the method further comprises, by the secure control unit of the secure element and the control unit of the individualization unit, jointly generating a shared secret, wherein the shared secret is preferably generated based on the secure channel protocol 'SCP11'. The method may further comprise each of the secure control unit of secure element and the control unit of the individualization unit deriving the secure individualization data based on the list of individualization requirements using the shared secret.

In other words, the shared secret may be an input parameter for the data derivation scheme, wherein the same data derivation scheme is to be used in the secure element and in the individualization unit.

In a second embodiment, the method may further comprise, by the secure control unit of the secure element, establishing a secure channel to the external individualization unit and providing the secure individualization data to the individualization unit over the secure channel. The method may further comprise the individualization unit establishing a secure session to the secure element and fetching derived data, in particular keys and/or PINs/PUKs in combination with the list of individualization requirements. The control unit of the individualization unit may be further configured to receive the secure individualization data over the secure channel. According to this embodiment, no data derivation needs to be carried out by the control unit of the individualization unit, which therefore may be located in any public space.

In one embodiment, the method further comprises, by the secure control unit of the secure element, generating the list of individualization requirements and/or wherein the list of individualization requirements comprises a number of list elements that are arranged in a predetermined order, wherein the method further comprises generating the individualization data for each list element strictly according to the predetermined order or sequence.

The drawings are not to be regarded as true to scale, and individual elements of the drawings may be shown in exaggeratedly large or exaggeratedly simplified form.
Fig. 1 shows an exemplary embodiment of a secure element according to an aspect of the invention.
Fig. 2 shows an exemplary embodiment of a system according to an aspect of the invention.
Fig. 3 shows an exemplary flow chart of a method according the first embodiment of the invention.
Fig. 4 shows an exemplary flow chart of a method according the second embodiment of the invention.

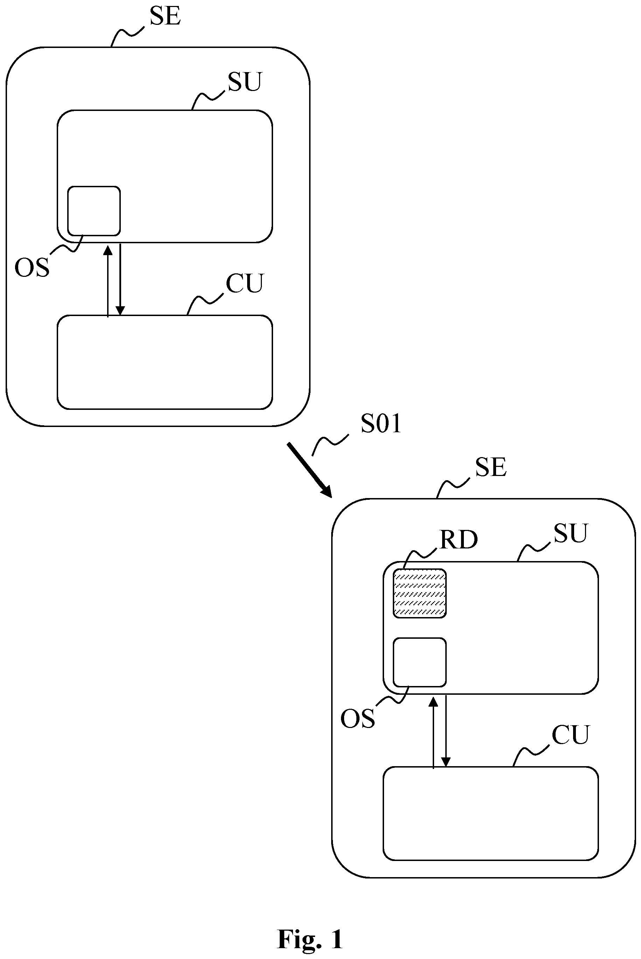

Fig. 1 shows an exemplary embodiment of a secure element according to an aspect of the invention.

There are two stages shown for the embodiment of the secure element SE of Fig. 1. These two stages are connected by the arrow S01. The first stage in the upper panel of Fig. 1 shows a secure element SE which may comprise a secure storage unit SU, in which an operating system OS is stored. The operating system OS may be a fully enabled operating system, not just a bootstrap operating system.

To be able to bootup the secure element SE, the secure element SE needs to be configured with replacement data RD. This configuration may be carried out at a personalization center of the manufacturer of the secure element or any trusted third party. The replacement data RD may be associated with a subscriber profile. To load the replacement data RD into the secure storage unit SU may involve installing a predetermined subscriber profile. The second stage, depicted after the arrow in the lower panel of Fig. 1, shows a secure storage unit SU of the secure element SE in which the replacement data RD has been stored.

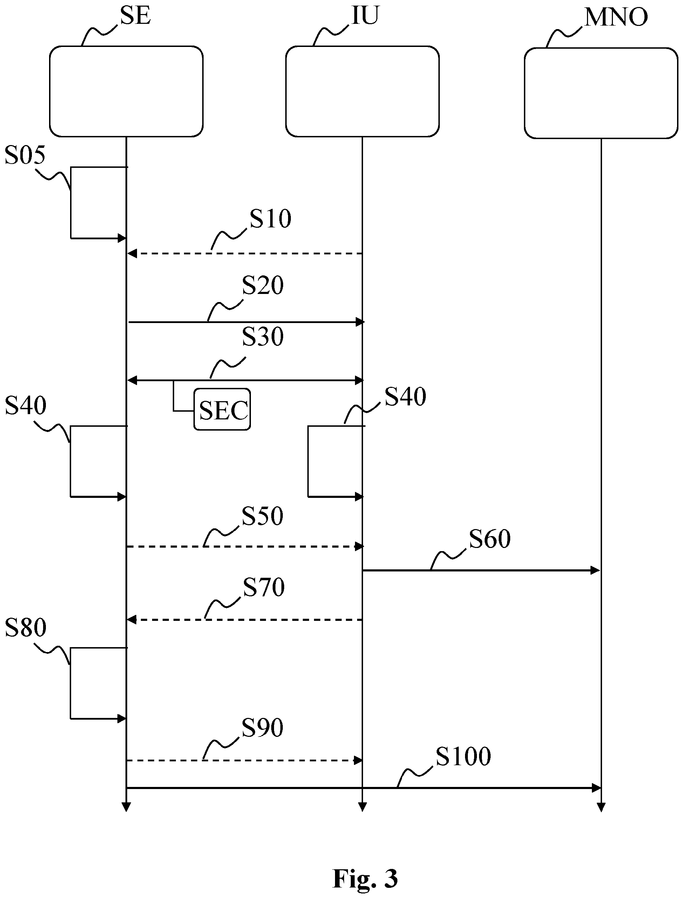

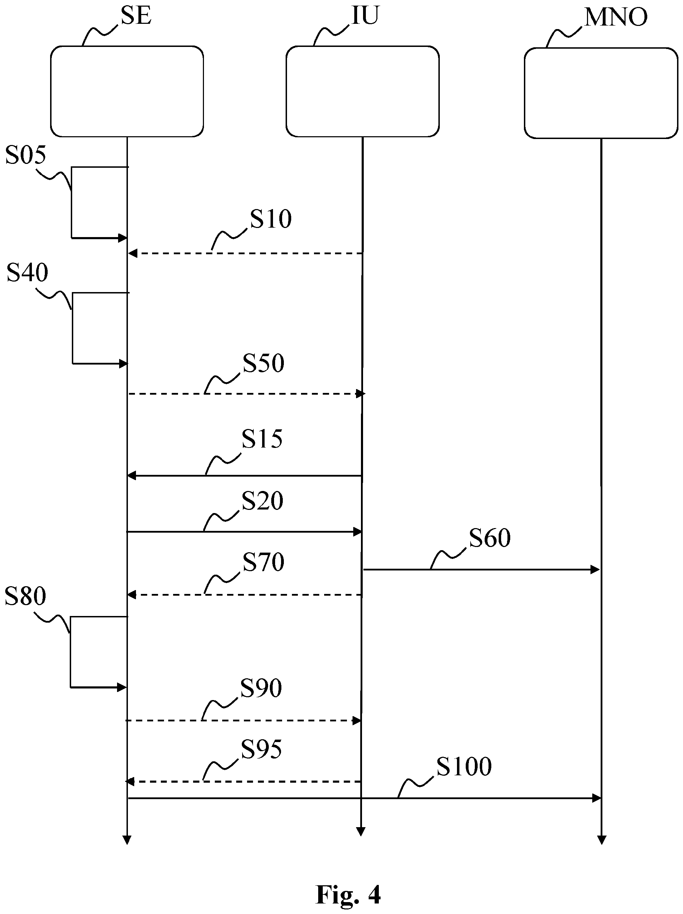

The secure element further comprises a secure control unit CU which is configured to perform the method steps as described in more detail with respect to Fig. 3 and Fig. 4.

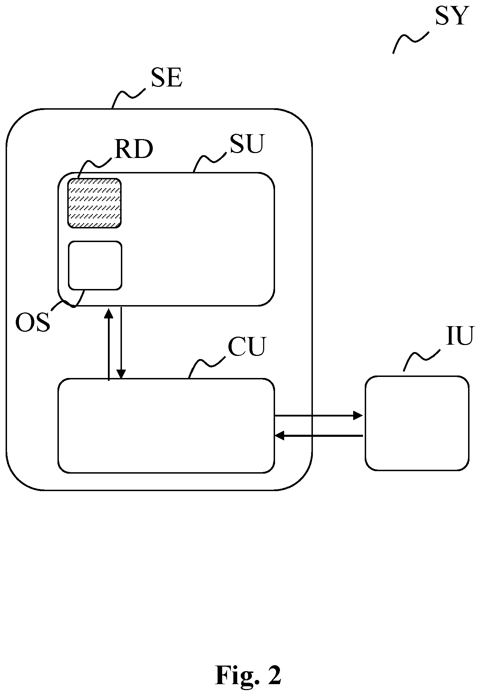

The control unit CU is at least configured to bootup the operating system OS using the predetermined replacement data RD, provide a list of individualization requirements IR to an external individualization unit IU (see Fig. 2), generate secure individualization data SD based on the list of individualization requirements IR and store the generated secure individualization data SD in the secure storage unit SU. Once the secure individualization data is derived, the secure control unit CU of the secure element SE may further establish a secure communication over the communication network using the secure individualization data SD.

The secure control unit CU may be communicatively coupled to a terminal device (not shown). The terminal device may comprise the secure element SE, a control unit and a communication interface through which the terminal device may be communicatively coupled to the mobile communication entity MNO.

Fig. 2 shows an exemplary embodiment of a system according to an aspect of the invention.

The system SY comprises a secure element SE and an individualization unit IU. The secure element SE may be configured according to the second state in Fig. 1, i.e., the replacement data RD is stored in its secure storage unit SU. The secure element SE is therefore able to bootup by its secure control unit CU.

The individualization unit IU may be communicatively coupled with the secure control unit CU of the secure element SE. According to the first embodiment, the secure control unit CU and the individualization unit IU may establish a certificate-based secure channel, preferably according to SCP11. This secure channel enables the secure control unit CU and the individualization unit IU to mutually generate a shared secret SEC which needs to strictly remain secret outside of the sphere of the secure element SE and the individualization unit IU. The secure element SE and the individualization unit IU may generate the shared secret SEC in order to individually derive secure individualization data. In other words, each of the secure element SE and the individualization unit may derive personalized cryptographic keys and/or PINs/PUKs using the shared secret as input parameter. While it is recommended to set up the individualization unit IU in a secure environment for deriving secure individualization data on its own, the secure environment is not essential. Operating the individualization unit IU in a public environment, however, may increase the risk for attacks on the shared secret significantly.

Thus, in case the individualization unit IU should be operated in a public environment such as an airport, a football stadium, or a train station, it is recommended to operate the system SY according to the second embodiment. Accordingly, no shared secret SEC is generated between the secure element SE and the individualization unit UI such that the individualization unit UI may not derive secure individualization data SD on its own. Instead, the individualization data SD may be fetched by the control unit of the individualization unit IU over a secure session. In the second embodiment, the list of individualization requirements IR is not needed to be shared with the individualization unit IU before deriving the secure individualization data SD, since only the secure control unit CU of the secure element SE is configured to derive the secure individualization data SD. However, the list of individualization data IR is needed by the mobile communication entity MNO after the secure individualization data SD has been generated to be able to map the derived keys and/pr PINs/PUKs to their dedicated location in the subscription profile installed in the secure storage unit SU.

The individualization unit IU may further establish a secure connection to a mobile communication entity MNO, in particular its HLR database (not shown) for completing the provisioning of the secure element. The individualization unit UI may be configured to transmit the secure individualization data SD in combination with the list of individualization requirements IR to the mobile communication entity MNO.

Fig. 3 shows an exemplary flow chart of a method according the first embodiment of the invention.

The secure element SE shown participating in the method visualized in Fig. 3 is already personalized with the minimum data, i.e., the predefined replacement data RD. Thus, the secure element SE may bootup in step S05. The secure element SE may be further equipped with a dedicated security domain and application, wherein the security domain may be configured to start a certificate-based session (i.e., SCP11) with the external individualization unit IU.

The dedicated security domain may be configured to derive all the secure materials (secure individualization data SD) using data derivation mechanism, e.g., via SCP11 protocol. The application may be responsible for storing the derived secure materials in appropriate placeholders whose (relative) address is provided with the mapping table/lookup table.

Optionally, in case of multiple security domains being loaded into the secure element SE, the individualization unit IU may select the dedicated security domain and application on the secure element SE. In other words, even if there are multiple security domains then there is one security domain and application dedicated for the UICC personalization, wherein the dedicated security domain and application may not perform any other activity. Preferably, after a complete personalization of the UICC the dedicated security domain and application are deleted and/or deactivated.

The dedicated security domain and application should not be visible to a customer as its role is limited to UICC personalization only, i.e., derivation of the secure individualization data SD.

A list of individualization requirements, also termed lookup table or mapping table herein, is maintained at the secure element SE based on the subscription profile shared by the mobile communication entity MNO. This lookup table/mapping table contains details about PINs/PUKs and keys which need to be personalized based on the profile at their dedicated location. The lookup table/mapping table is also relevant to the mobile communication entity MNO which needs to map the generated secure individualization data with its key and PINs/PUKs index.

In step S10, the individualization unit IU may fetch the mapping table from the secure element SE.

In step S20, the secure element SE may provide, i.e., return the mapping table to the individualization unit IU.

In step S30, the secure element SE and the individualization unit IU may establish a certificate-based secure channel to generate the shared secret SEC.

Subsequently, in step S40, the shared secret SEC may be used individually by the secure element SE and the individualization unit UI to derive the secure individualization data SD. The secure individualization data SD may comprise keys, PINs/PUKs, and other material/data that is personalized for each secure element SE.

The dedicated security domain may facilitate the required PINs/PUKs and keys generation using data derivation mechanism at the individualization unit IU via the secure session established with a personalization application of the individualization unit IU. Preferably, the data is derived according to a predefined sequence configured in the mapping table.

In step S50, the secure element SE may indicate an end of its data derivation by transmitting an individualization generation end indicator or a data derivation end indicator to the individualization unit IU.

In step S60, the individualization unit IU may, after having executed the same data derivation scheme to generate the secure individualization data, transfer its generated secure individualization data (PINs/PUKs and/or keys) securely to the mobile communication entity MNO, in particular into its database HLR, using the lookup table/ mapping which will map the generated data with Key and PINs/PUKs index.

In step S70, the individualization unit IU may trigger the secure element SE, in particular the dedicated application, to store the derived data in appropriate placeholders whose location is mapped in the mapping table, e.g., in its second attribute, in which an address in the secure storage unit SU is stored.

In step S80, once data derivation is completed at the secure element SE side then derived keys and PINs/PUKs may be added to dedicated places as per the information mentioned in mapping table. A dedicated application will perform this duty i.e., preparing lookup table/mapping table with details about keys and PINs/PUKs which are to be generated and loading them to proper place after generation. For example, command script may be prepared for loading of keys and PINs/PUKs. There may be different implementations for this step based on use case.

In step S90, the secure element SE may transmit a success message to the individualization unit IU signaling the successful storage of the derived keys and/or PINs/PUKs in the secure storage unit SU of the secure element SE.

After personalization and loading generated keys and PINs the security domain and application may be deleted

Subsequently, in step 100, the secure element SE may use its personalized profile to establish a secure connection over the mobile communication network.

An advantage of this embodiment is that data generation and individualization processes are not required at production side of the secure element and are shifted and distributed at card issuance stage. Thus, production time will be saved. In addition, no extra infrastructures are required at mobile communication entity's side to maintain key management.

Fig. 4 shows an exemplary flow chart of a method according the second embodiment of the invention.

The secure element SE shown participating in the method visualized in Fig. 3 is already personalized with the minimum data, i.e., the predefined replacement data RD. Thus, the secure element SE may bootup in step S05. In contrast to the first embodiment as shown in Fig.3, however, the secure element SE is not further equipped with a dedicated security domain and application.

A potential use case in which the method according to Fig. 4 may be used is the issuance of a new pre-paid card comprising a secure element, e.g., at a card issuance machine, such as an issuance kiosk, e.g., of the (mobile) communication operator MNO. At the card issuance machine (issuance kiosk), which is an example for the individualization unit IU, a user may share his unique identity and request for a pre-paid card, i.e., a secure element SE. Upon verification of the user, the card issuance machine may issue an inactivated pre-paid card, which the user then may insert into the machine for its activation. In other words, a user may request for a pre-paid card on point of sale (for example at point of sale on arrival of new country/ new place) by submitting his/her identity to the issuance kiosk. Once the user identity is verified, then the issuance kiosk may issue an inactive card to the user.

After inserting the card, the secure element SE may bootup in step S05.

Next, in step S10, the individualization unit IU may trigger the secure element SE for data derivation.

According to the second embodiment, only the secure element SE derives the secure individualization data, i.e., personalized key and/or PINs/PUKs in step S40 based on a pre-stored lookup table/mapping table (list of individualization requirements IR).

In subsequent step S50, the secure element SE may transmit a data derivation completion message to the individualization unit IU.

In step S15, upon receiving a notification that the data derivation is complete in the secure element SE, the individualization unit IU may establish a secure session with the secure element SE and fetch the derived data and mapping table securely.

In step S20, the secure element SE returns the derived data and the list of individualization requirements IR (mapping table) to the individualization unit IU within the secure session. The secure session may be an encrypted session in which the derived data is transport-encrypted. In one embodiment, the secure individualization data SD (derived data) and the mapping table may only be stored in a volatile memory of the individualization unit IU. Upon realizing an attack on the individualization unit IU in public space, the power of the individualization unit IU may be cut such that the secure individualization data is instantly lost. In one embodiment, the mapping table is stored in encrypted format.

In step S60, the individualization unit IU may, after having executed the same data derivation scheme to generate the secure individualization data SD, transfer its generated secure individualization data (PINs/PUKs and/or keys) securely to the mobile communication entity MNO, in particular into its database HLR, using the lookup table/ mapping which will map the generated data with Key and PINs/PUKs index. To secure the transfer of the secure individualization data SD to the mobile communication entity MNO, FTP or a similar protocol may be used.

In step S70, the individualization unit IU may trigger the secure element SE to store the derived data in appropriate placeholders whose location is mapped in the mapping table, e.g., in its second attribute, in which an address in the secure storage unit SU is stored.

In step S80, the derived secure individualization data SD may be stored in their dedicated places as encoded in the mapping table. Steps S80 and S90 of Fig. 4 may be analogous to steps S80 and S90 of Fig. 3.

In step S95, the individualization unit IU may activate the card. In one embodiment, the communication entity MNO transmits an indication in case the transfer data is successfully received, decrypted and stored to the HLR of the communication entity MNO, wherein the individualization unit IU may only activate the card after having received the indication of the communication entity MNO.

Subsequently, in step S100, the secure element SE may use its personalized profile to establish a secure connection over the mobile communication network.

The second embodiment according to Fig. 4 enables a user or expert technician to prepare the card at an outlet of the mobile network operator using an individualization unit configured as card issuance machine. This service can be used as immediate pre-paid card issuance service on point of sale, for example at point of sale on arrival in a new country/new place.

In combination with a secure user verification, the methods according to Fig. 3 and/or Fig. 4 may be further extended to post-paid card issuance.

### Reference signs:

- SE: Secure element
- SU: Secure storage unit
- CU: Secure control unit
- IU: External individualization unit
- MNO-: Mobile communication entity
- SY: System
- RD: Replacement data
- IR: List of individualization requirements
- SD: Secure individualization data
- SEC: Shared secret

- S01: Load replacement data RD
- S05: Bootup operating system OS
- S10: Fetch the list of individualization requirements IR
- S15: Fetch derived secure individualization data SD
- S20: Provide list of individualization requirements IR
- S30: Generate shared secret SEC
- S40: Derive secure individualization data
- S50: Transmit an individualization generation end indicator
- S60: Transfer secure individualization data SD to mobile communication entity MNO
- S70: Trigger application to store the secure individualization data SD
- S80: Store the derived secure individualization data SD
- S90: Transfer a success message
- S95: Active the secure element
- S100: Establish a secure communication over the mobile communication network

## Claims

1. A secure element (SE) to securely communicate over a communication network, the secure element (SE) comprising:
- a secure storage unit (SU) in which an operating system (OS) and predetermined replacement data (RD) are stored; and
- a secure control unit (CU),
wherein the secure control unit (CU) is configured to:
- bootup the operating system (OS) using the predetermined replacement data (RD);
- provide a list of individualization requirements (IR) to an external individualization unit (IU);
- generate secure individualization data (SD) based on the list of individualization requirements (IR);
- store the generated secure individualization data (SD) in the secure storage unit (SU); and
- establish a secure communication over the communication network using the secure individualization data (SD).

2. The secure element of claim 1, wherein the external individualization unit is hosted in a secure environment, and wherein the secure control unit (CU) is further configured to:
- generate a shared secret (SEC) with the external individualization unit (IU); and
- generate the secure individualization data based on the list of individualization requirements using the shared secret;

3. The secure element of claim 1, wherein the secure control unit (CU) is further configured to:
- establish a secure channel to the external individualization unit; and
- provide the secure individualization data to the external individualization unit over the secure channel.

4. The secure element (SE) of any of the preceding claims, wherein the list of individualization requirements comprises a number of list elements that are arranged in a predetermined order, wherein the secure control unit (CU) is configured to generate the individualization data for each list element strictly according to the predetermined order.

5. The secure element (SE) of any of the preceding claims, wherein the list of individualization requirements comprises a number of list elements, wherein each list element comprises a first attribute, in which a code representing a secure individualization parameter is stored and a second attribute, in which an address in the secure storage unit (SU) is stored, and wherein the secure control unit (CU) is further configured to store the secure individualization data in the secure storage unit (SU) at the address indicated in a respective list element.

6. The secure element (SE) of any of the preceding claims, wherein the predetermined replacement data is stored in the secure storage unit at the addresses comprised in the list of individualization requirements, wherein the secure control unit (CU) is configured to replace the predetermined replacement data by the generated individualization data according to the list of individualization requirements.

7. The secure element (SE) of any of the preceding claims, wherein the list of individualization requirements is stored in the secure storage unit (SU) and/or wherein the secure control unit (CU) is configured to initially generate the list of individualization requirements.

8. The secure element (SE) of any of the preceding claims, wherein the secure control unit (CU) is further configured to transmit an individualization generation end indicator to the external individualization unit after having generated the secure individualization data and/or to transmit a success message to the external individualization unit after having stored the secure individualization data.

9. System for individualization of a secure element (SE), the system comprising a secure element (SE) and an individualization unit external to the secure element, wherein the secure element comprises a secure storage unit in which an operating system (OS) and predetermined replacement data (RD) are stored, and a secure control unit (CU) which is configured to:
- boot up the operating system (OS) using the predetermined replacement data (RD);
- provide a list of individualization requirements to the individualization unit;
- generate secure individualization data based on the list of individualization requirements;
- store the generated secure individualization data (SD) in the secure storage unit (SU); and
- establish a secure communication over the communication network using the secure individualization data (SD);
and wherein the individualization unit comprises a control unit which is configured to:
- transmit the secure individualization data to a communication entity.

10. The system according to claim 9, wherein the secure control unit (CU) of the secure element is further configured to:
- generate a shared secret (SEC) with the individualization unit (IU); and
- generate the secure individualization data based on the list of individualization requirements using the shared secret; and
wherein the individualization unit is hosted in a secure environment, wherein the control unit of the individualization unit is further configured to:
- generate the shared secret with the secure element; and
- generate the secure individualization data based on the list of individualization requirements using the shared secret.

11. The system according to claim 9, wherein the secure control unit (CU) of the secure element is further configured to:
- establish a secure channel to the individualization unit; and
- provide the secure individualization data to the individualization unit over the secure channel; and
wherein the control unit of the individualization unit is further configured to receive the secure individualization data over the secure channel.

12. A method for securely individualize a secure element in a system according to any of claims 9 to 11, the method comprising, by the secure control unit (SU) of the secure element (SE):
- booting up the operating system (OS) using the predetermined replacement data (RD);
- providing a list of individualization requirements to the secure individualization unit;
- generating a secure individualization data based on the list of individualization requirements;
- storing the generated secure individualization data (SD) in the secure storage unit (SU); and
- establishing a secure communication over the communication network using the secure individualization data (SD); and
by the control unit of individualization unit:
- transmitting the secure individualization data to a communication entity (MNO).

13. The method of claim 12 further comprising, by the secure control unit of the secure element and the control unit of the individualization unit, jointly generating a shared secret (SEC), wherein the shared secret is preferably generated based on the secure channel protocol 'SCP11', and each of the secure control unit of secure element and the control unit of the individualization unit generating the secure individualization data based on the list of individualization requirements using the shared secret.

14. The method of claim 12 further comprising, by the secure control unit of the secure element:
- establishing a secure channel to the external individualization unit; and
- providing the secure individualization data to the individualization unit over the secure channel; and
by the control unit of the individualization unit is further configured to receive the secure individualization data over the secure channel.

15. The method of any of the claims 12 to 14, further comprising, by the secure control unit of the secure element, generating the list of individualization requirements and/or wherein the list of individualization requirements comprises a number of list elements that are arranged in a predetermined order, wherein the method further comprises generating the individualization data for each list element strictly according to the predetermined order.

## Amended claims

### Amended claims in accordance with Rule 137(2) EPC.

1. A secure element (SE) to securely communicate over a communication network, the secure element (SE) comprising:
- a secure storage unit (SU) in which an operating system (OS) and predetermined replacement data (RD) are stored; and
- a secure control unit (CU),
wherein the secure control unit (CU) is configured to:
- bootup the operating system (OS) using the predetermined replacement data (RD);
- provide a list of individualization requirements (IR) to an external individualization unit (IU);
- generate secure individualization data (SD) based on the list of individualization requirements (IR);
- store the generated secure individualization data (SD) in the secure storage unit (SU); and
- establish a secure communication over the communication network using the secure individualization data (SD).

2. The secure element of claim 1, wherein the external individualization unit is hosted in a secure environment, and wherein the secure control unit (CU) is further configured to:
- generate a shared secret (SEC) with the external individualization unit (IU); and
- generate the secure individualization data based on the list of individualization requirements using the shared secret.

3. The secure element of claim 1, wherein the secure control unit (CU) is further configured to:
- establish a secure channel to the external individualization unit; and
- provide the secure individualization data to the external individualization unit over the secure channel.

4. The secure element (SE) of any of the preceding claims, wherein the list of individualization requirements comprises a number of list elements that are arranged in a predetermined order, wherein the secure control unit (CU) is configured to generate the individualization data for each list element strictly according to the predetermined order.

5. The secure element (SE) of any of the preceding claims, wherein the list of individualization requirements comprises a number of list elements, wherein each list element comprises a first attribute, in which a code representing a secure individualization parameter is stored and a second attribute, in which an address in the secure storage unit (SU) is stored, and wherein the secure control unit (CU) is further configured to store the secure individualization data in the secure storage unit (SU) at the address indicated in a respective list element.

6. The secure element (SE) of any of the preceding claims, wherein the predetermined replacement data is stored in the secure storage unit at the addresses comprised in the list of individualization requirements, wherein the secure control unit (CU) is configured to replace the predetermined replacement data by the generated individualization data according to the list of individualization requirements.

7. The secure element (SE) of any of the preceding claims, wherein the list of individualization requirements is stored in the secure storage unit (SU) and/or wherein the secure control unit (CU) is configured to initially generate the list of individualization requirements.

8. The secure element (SE) of any of the preceding claims, wherein the secure control unit (CU) is further configured to transmit an individualization generation end indicator to the external individualization unit after having generated the secure individualization data and/or to transmit a success message to the external individualization unit after having stored the secure individualization data.

9. System for individualization of a secure element (SE), the system comprising a secure element (SE) and an individualization unit external to the secure element, wherein the secure element comprises a secure storage unit in which an operating system (OS) and predetermined replacement data (RD) are stored, and a secure control unit (CU) which is configured to:
- boot up the operating system (OS) using the predetermined replacement data (RD);
- provide a list of individualization requirements to the individualization unit;
- generate secure individualization data based on the list of individualization requirements;
- store the generated secure individualization data (SD) in the secure storage unit (SU); and
- establish a secure communication over the communication network using the secure individualization data (SD);
and wherein the individualization unit comprises a control unit which is configured to:
- transmit the secure individualization data to a communication entity.

10. The system according to claim 9, wherein the secure control unit (CU) of the secure element is further configured to:
- generate a shared secret (SEC) with the individualization unit (IU); and
- generate the secure individualization data based on the list of individualization requirements using the shared secret; and
wherein the individualization unit is hosted in a secure environment, wherein the control unit of the individualization unit is further configured to:
- generate the shared secret with the secure element; and
- generate the secure individualization data based on the list of individualization requirements using the shared secret.

11. The system according to claim 9, wherein the secure control unit (CU) of the secure element is further configured to:
- establish a secure channel to the individualization unit; and
- provide the secure individualization data to the individualization unit over the secure channel; and
wherein the control unit of the individualization unit is further configured to receive the secure individualization data over the secure channel.

12. A method for securely individualize a secure element in a system according to any of claims 9 to 11, the method comprising, by the secure control unit (SU) of the secure element (SE):
- booting up the operating system (OS) using the predetermined replacement data (RD);
- providing a list of individualization requirements to the secure individualization unit;
- generating a secure individualization data based on the list of individualization requirements;
- storing the generated secure individualization data (SD) in the secure storage unit (SU); and
- establishing a secure communication over the communication network using the secure individualization data (SD); and
by the control unit of individualization unit:
- transmitting the secure individualization data to a communication entity (MNO).

13. The method of claim 12 further comprising, by the secure control unit of the secure element and the control unit of the individualization unit, jointly generating a shared secret (SEC), wherein the shared secret is preferably generated based on the secure channel protocol 'SCP11', and each of the secure control unit of secure element and the control unit of the individualization unit generating the secure individualization data based on the list of individualization requirements using the shared secret.

14. The method of claim 12 further comprising, by the secure control unit of the secure element:
- establishing a secure channel to the external individualization unit; and
- providing the secure individualization data to the individualization unit over the secure channel; and
by the control unit of the individualization unit is further configured to receive the secure individualization data over the secure channel.

15. The method of any of the claims 12 to 14, further comprising, by the secure control unit of the secure element, generating the list of individualization requirements and/or wherein the list of individualization requirements comprises a number of list elements that are arranged in a predetermined order, wherein the method further comprises generating the individualization data for each list element strictly according to the predetermined order.
